# EUROPÄISCHE PATENTSCHRIFT

(11) **EP 0 894 563 B1**
(45) Veröffentlichungstag und Bekanntmachung des Hinweises auf die Patenterteilung: **07.05.2003**
(21) Anmeldenummer: 98114534.5
(22) Anmeldetag: 03.08.1998
(51) Int. Cl.: B23P 19/04, B60J 10/00

(54) **Vorrichtung zum Einlegen und Zuführen von Profilgummidichtungen in Schlitze von Formteilen**
Device for inserting and feeding profiled sealing strips in slots of formed articles
Procédé pour insérer et alimenter des joints d' étancheité profilés en caoutchouc dans les fentes des pièces formées

(30) Priorität: 02.08.1997 DE 29713846 U
(43) Veröffentlichungstag der Anmeldung: 03.02.1999
(73) Patentinhaber: Prösl, Johanna, 92708 Mantel (DE)
(72) Erfinder: Prösl, Johanna, 92708 Mantel (DE)
(74) Vertreter: Dreiss, Fuhlendorf, Steimle & Becker

(56) Entgegenhaltungen:
- EP-A- 0 110 156
- EP-A- 0 669 184
- EP-A- 0 759 491
- DE-U- 9 010 929
- GB-A- 2 201 482
- US-A- 4 620 354
- US-A- 5 611 550
- B. EICH ET AL: "Automatische Handhabung und Montage nicht formstabiler Bauteile" KAUTSCHUK + GUMMI KUNSTOFFE, Bd. 46, Nr. 8, August 1993, Seiten 629-638, XP000389721 HEIDELBERG, DE

## Beschreibung

Die Erfindung betrifft eine Vorrichtung zum Einlegen und Zuführen von Profilgummi in Einlegestege von Formteilen, z.B. Türen von Kraftfahrzeugen oder entsprechenden Werkstücken, mit Hilfe eines Roboters, gemäss dem Oberbegriff des Anspruchs 1. (Siehe, z.B., US-A-5,611,550).

Derartige Profilgummidichtungen sind vorzugsweise als in die Einlegestege von Formteilen einzusetzende Hartgummiteile mit daran angefügtem Weichgummiteilen (Moos-gummi) einstückig und endlos ausgeführt. Das Einlegen dieser Profildichtungen in die von Stegen gebildeten Kanäle bzw. Rinnen erfolgt derzeit von Hand, da selbsttätig arbeitende Einlegevorrichtungen nicht zur Verfügung stehen, die ein zugund stauchfreies Einlegen gewährleisten. Abgesehen davon, daß das manuelle Zuführen und Einlegen zeit- und kostenintensiv sowie körperlich anstrengend ist, ist das Ergebnis des Einlegens auch vom Ergebnis her nicht einwandfrei.

Aufgabe der Erfindung ist es, das Zuführen und Einlegen von Profilgummidichtungen in die Dichtungsaufnahmekanäle selbsttätig und zug- sowie stauchfrei durchzuführen und damit ein optimales und gleichbleibendes Ergebnis zu erzielen.

Gemäß der Erfindung wird diese Aufgabe mit einer Vorrichtung nach dem Anspruch 1 gelöst. Weitere Ausgestaltungen der Erfindung sind Gegenstand der Unteransprüche.

Der Roboter nimmt mit seinem Roboterkopf das Einlegewerkzeug, nämlich den Profilgummi-Einlegekopfauf. Der Bewegungsablauf des Roboterkopfes ist programmgesteuert, so daß für das Zuführen und Einlegen des Profilgummis die Bewegungsgeschwindigkeit an den Wegverlauf (geradlinige und unterschiedlich gekrümmte Abschnitte), die Anfangs- und Endbedingungen, die Betätigung der Schneidvorrichtung, die Überwachung eines gleichbleibenden Zuges für eine zug- und stauchfreie Bewegung eindeutig vorgegeben werden. In den Programmdaten wird auch das Schrumpfen des Werkstückes während des Abkühlens beim Einlegen des Profilgummis in das noch heiße Werkstück (Temperatur von ca. 80° C) berücksichtigt.

Der einzulegende Profilgummi wird endlos von einer Abrollhaspel oder aus einem Vorratsbehälter abgerollt und über eine Tänzerwalze mit Ultraschallsensor dem Roboterkopf zug- und stauchfrei zugeführt, und dabei entwirrt und ausgedreht (falls erforderlich). in seiner Grundstellung ist der Roboterkopf etwa 300 mm über der Einlegeposition des Werkstückes, z.B. einer Türverkleidung, positioniert. Beim Anfahren des Programms wird der Profilgummi in Einlegerichtung ein Stück, z.B. 10 mm weit, durch die Formrolle gefördert und dann mit Hilfe der Schneidevorrichtung abgeschnitten, damit ein definierter Ausgangspunkt bzw. Nullpunkt für die Länge des Formgummis erhalten wird.

Nach dem Abschneiden des Profilgummistreifens und Festlegen der Nullpunktposition des einzulegenden Profilgummiabschnittes wird der Roboterkopf in der Z-Richtung, nämlich in der Höhenachse angefahren, bis er eine Position, die z.B. 2 mm über dem Einlegesteg liegt, erreicht hat. Der Rotorkopf wird dabei in bezug auf die Andrückrolle positioniert, und der Formgummi mit Hilfe der Transportrolle zwischen Steg und Andrückrolle auf exakte Länge in Nullposition geschoben. Liegt der Formgummi an der Andrück- bzw. Formrolle an, öffnet sich der Formgummi an den Einlegestegen. Ist diese Positionierung des Formgummis abgeschlossen, fährt der Roboterkopf in Bewegungsrichtung bahnsynchron mit den Roboterantrieben in Bewegungsrichtung entlang der Form des Einlegesteges.

Die Länge des eingelegten Formgummis wird über die Meßrolle gemessen (Umfang der Meßrolle multipliziert mit der Anzahl der Umdrehungen der Meßsonde). Der Formgummi wird bereits vor Erreichen des Endpunktes der vorgegebenen Länge, die bei einem speziellen Ausführungsbeispiel 2430 +/- 0,5 mm beträgt, mit Hilfe der Schneidvorrichtung abgeschnitten; die im Einlegekopf befindliche Restlänge des eingelegten Formgummistreifens wird in den Einlegespalt eingebracht, ohne daß der Formgummi von der Zuführrolle bis zum Endpunkt transportiert wird.

Bei einer bevorzugten Ausführungsform wird der Profilgummi als Abdichtgummistreifen in eine Türverkleidung eingelegt. Der Formgummistreifen wird bereits verarbeitet, wenn eine Temperatur von 80° an der Türverkleidung erreicht ist; der beim Abkühlen der Kunststoff-Türverkleidung auftretende Schwund wird durch den Profilgummi-Einlegekopf ausgeglichen.

Während des gesamten Einlegevorganges wird der Transport des Formgummistreifens insbesondere zug- und stauchfrei von einem Sensor, z.B. einem Ultraschallsensor der Tänzerwalze überwacht und gesteuert. Insbesondere bei besonders engen Radien von ca. 10 mm und besonders schwierig handhabbaren Formgummimaterialien ist es bei entsprechender Flexibilität des Formgummis schwierig, den Streifen lediglich durch Eindrücken zu fixieren; in derartigen Fällen kann eine Einklebevorrichtung am Kopf vorgesehen werden, um an den Stellen enger Radien den Profilgummi an den Einlegestegen der Türverkleidung festzulegen.

Der Gummieinlegekopf ist an dem Roboterkopf an dessen Achse angeflanscht und über die Führungsschiene und die auf einem Führungsdorn angeordnete Druckfeder federnd gelagert, damit ein selbsttätiges Ausweichen in der Z-Achse (Höhenachse) des Führungskopfes ohne Umprogrammierung erzielt werden kann. Die Führungsschiene ist durch diese Druckfeder ständig nach unten vorgespannt und die gesamte Grundplatte des Gummieinlegekopfes in der Z-Richtung schwimmend angeordnet, so daß der Einlegegummi die Führung im Bereich des Steges in der Größenordnung von 1 - 2 mm übernehmen kann.

Von der Abrollhaspel aus wird der Formgummistreifen durch eine Führungsöse am oberen Teil der Trägerplatte des Gummieinlegekopfes den Führungsschienen der Profilgummizuführung zugeführt. Die Antriebsrolle sowie die einstellbare Andrückrolle übernehmen den Anfang des Formgummistreifens. Diese Rollen sind der Form des zu transportierenden Formgummis angepaßt. Die Rollen sind in der formschlüssigen Aufnahme so geriffelt, daß ein Verdrehen des Formgummis nicht möglich ist, wodurch der Formgummi zug- und stauchfrei transportiert werden kann. Die der Form des Formgummis ebenfalls angepaßten Führungsschienen stellen bei der Zuführung des Formgummis eine Verdrehsicherung und eine einwandfreie Positionierung des Formgummis an der Andrückrolle dar. Diese Führungsschienen sind zwischen Antriebsrolle und Andrückrolle angeordnet und die untere Führungsschiene weist im Übergang zum Steg in Höhe der Andrückrolle eine Führungsnase auf, die ein Öffnen des Profilgummis bewirkt und das Einführen des Gummis in den Einlegesteg der Türverkleidung erleichtert.

Nachstehend wird die Erfindung in Verbindung mit der Zeichnung anhand eines Ausführungsbeispieles erläutert. Es zeigt:
- Fig. 1: eine schematische Darstellung einer Kfz-Türverkleidung mit Einlegeprofil,
- Fig. 2: eine Ansicht der Vorderseite eines Profilgummi-Einlegekopfes,

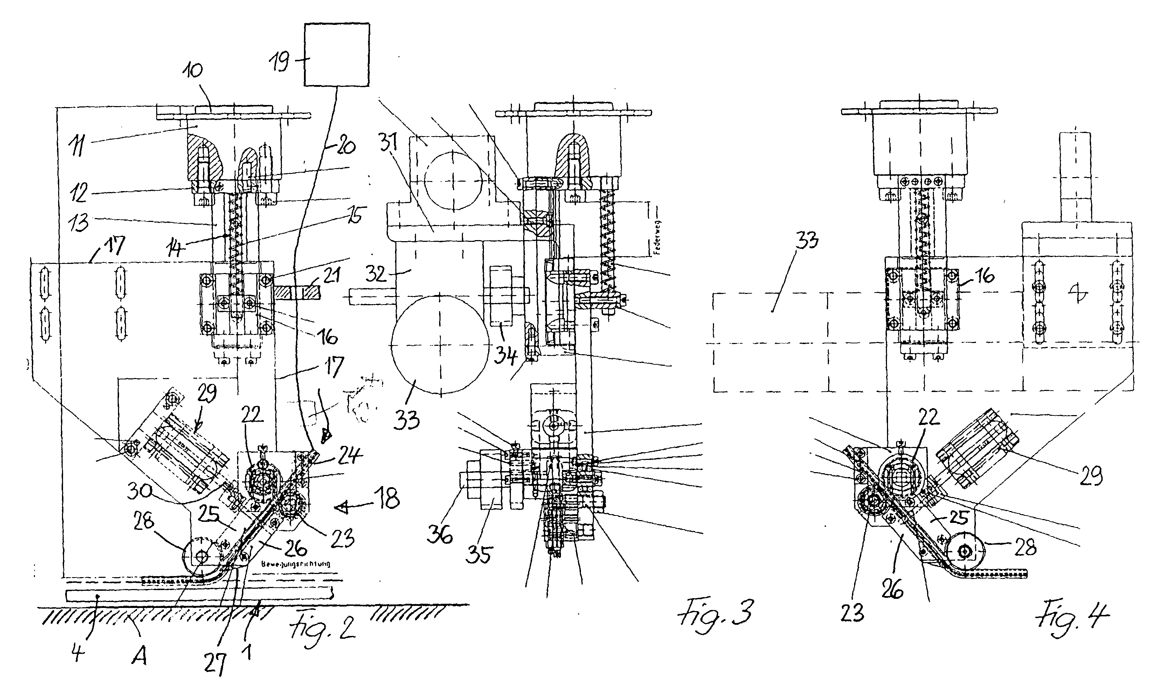

- Fig. 3: eine Ansicht des Einlegekopfes nach Fig. 2 von der Seite,
- Fig. 4: eine Ansicht der Rückseite des Einlegekopfes in bezug auf Fig. 2,

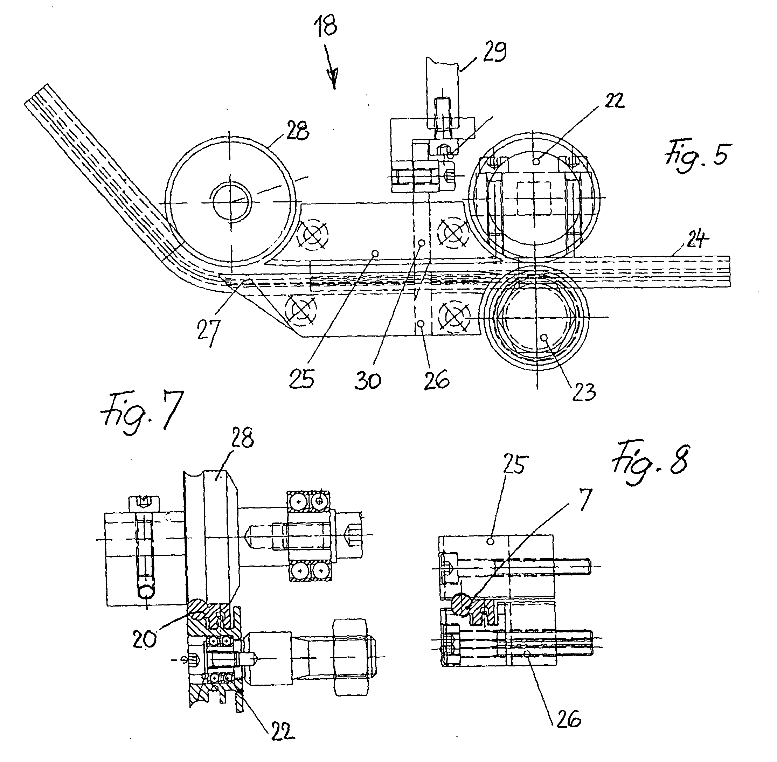

- Fig. 5: einen Ausschnitt aus Fig. 2 (Profilgummizuführung) in vergrößertem Maßstab (Zeichnung um 50° gedreht),

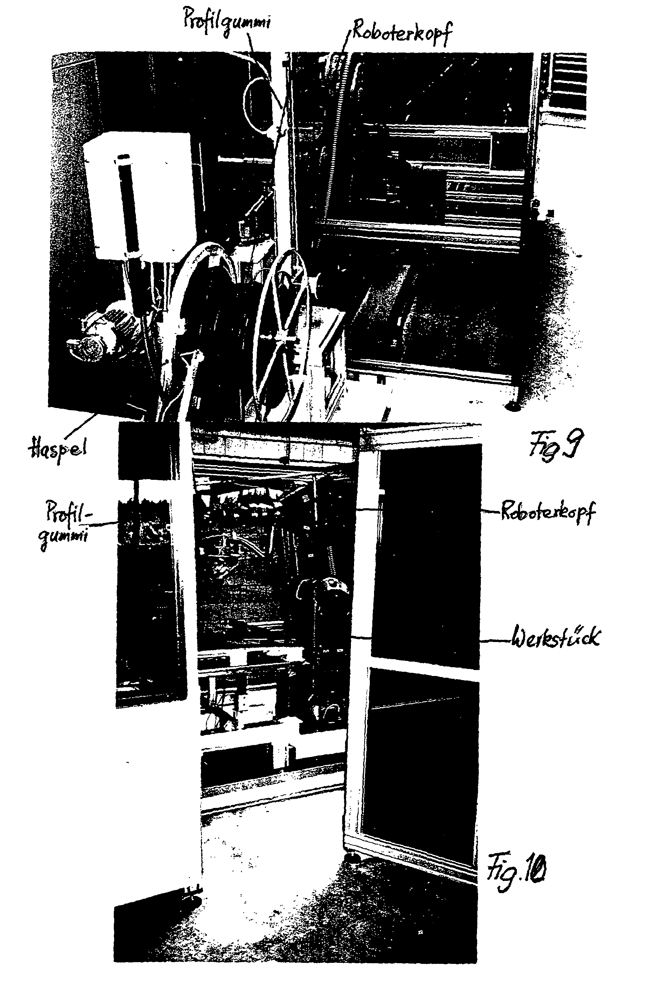

- Fig. 6: einen Ausschnitt aus der Fig. 3 (Profilgummizuführung) in vergrößertem Maßstab,
- Fig. 7: eine Detailansicht der Lagermontage nach Fig. 5 in vergrößertem Maßstab als Schnittdarstellung durch die Andrückrolle,
- Fig. 8: eine Detaildarstellung der Führungsschienen im Schnitt,
- Fig. 9: eine fotographische Ansicht der den Endlos-Profilgummistreifen aufnehmenden Haspel mit dem abgezogenen Profilgummistreifen, der an den Roboterkopf geführt ist, und
- Fig. 10: eine fotografische Ansicht des Roboters mit Roboterarm und Roboterkopf und einem auf einem Werktisch aufliegenden Werkstück, in das der Profilgummistreifen mit Hilfe des Roboterkopfes eingeführt wird.

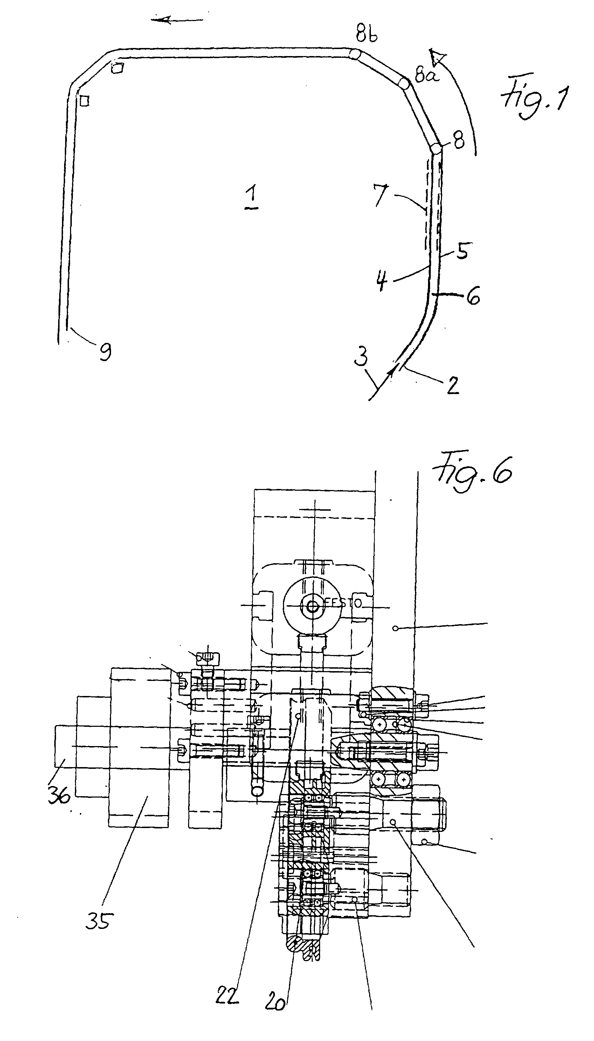

In der schematischen Darstellung der Fig. 1 ist die Türverkleidung 1 in Aufsicht dargestellt. Der Startpunkt ist als Nullpunkt mit 2 bezeichnet, mit 3 die Einzugsrichtung. Der innengelegene Einlegesteg 4 bildet mit der äußeren Abdichtfläche 5 eine Rinne 6 für die Aufnahme des gestrichelt angedeuteten Profilgummistreifens 7, der im eingelegten Zustand geringfügig über den Einlegesteg 4 nach oben vorsteht. An den Stellen 8, 8a, 8b, ..., an denen programmgemäß eine Abweichung von der geraden in eine gekrümmte Verlaufslinie (und umgekehrt) erfolgt, und die als "Teach-Stellen" bezeichnet werden, wird die Bewegung des Rotorkopfes geändert und die Einzugsgeschwindigkeit reduziert. Am Einzugsende 9 ist der Einzugsvorgang abgeschlossen, wobei die für den Verlauf vom Nullpunkt 2 zum Endpunkt 9 erforderliche Länge des Profilgummistreifens vor Erreichen der Endposition 9 abgeschnitten worden ist. Bei einer praktischen Ausführung nimmt der Vorgang des Einlegens des Streifens 7 vom Beginn bis zum Ende 2 - 9 ca. 20 Sekunden in Anspruch.

Der Roboterkopf 10 nimmt einen Flansch 11 und eine Flanschplatte 12 sowie eine daran anschließende weitere Flanschplatte 13 auf. Auf der Flanschplatte 12 ist ein Ende eines Führungsdornes 14 und einer damit gekoppelten Druckfeder 15 befestigt. Das entgegengesetzte Ende der Feder 15 ist mit einer Linearführung 16 verbunden, die an einer Trägerplatte 17 befestigt ist, welche den gesamten Einziehkopf 18 trägt. Der endlose Profilgummistreifen 7 bzw. 20 ist in einer Vorratsstelle, insbesondere einer Abrollhaspel 19 angeordnet, von wo der Profilgummistreifen 20 über eine Öse 21 einer Antriebs- und Formrolle 22, die auch als Meßrolle und Transportrolle wirkt, zugeführt wird, und mit der eine Gegenrolle 23 zusammenarbeitet.

Der Profilgummistreifen 20, der bei der hier dargestellten Ausführungsform verwendet wird, besteht aus einem Profilabschnitt 20a aus Hartgummi und einem damit fest verbundenen Abschnitt 20b aus Weichgummi (Moosgummi), an dem eine Dichtlippe angeformt sein kann. Der Profilgummistreifen wird zunächst in einen Führungseinlauf 24 eingesetzt und von der Transportrolle 22 ein Stück weit eingeschoben, bis es zwischen einer oberen Führungsschiene 25 und einer unteren Führungsschiene 26 soweit eingeführt ist, daß der von einem Schneidzylinder 29 beaufschlagte Schneidstempel 30 das Vorderende des Profilgummistreifens abschneiden kann, um einen definierten Nullpunkt für die Länge des Profilgummis festlegen zu können. Nach dem Abschneiden des Profilgummis wird der Roboterkopf 10 angefahren und in Z-Richtung gegen das Werkstück 1 etwa 2 mm über dem Einlegesteg 4 bewegt, der Roboterkopf 10 wird auf die Andrückrollen 28 positioniert, und der Profilgummi mit der Transportrolle 22 zwischen Steg 24 und Andrückrolle 28 auf exakte Nullposition geschoben. Der Formgummi legt sich an die Andrückrolle 28 und öffnet an den Einführstegen 27, wodurch das Einführen des Gummis am Werkstück erleichtert wird. Nach dem Positionieren des Formgummis fährt der Roboter den Einziehkopf 18 im Einziehsinn bahnsynchron entlang des Verlaufes des Einlegesteges 4 von der Nullposition in die Endposition.

An der Trägerplatte 17 ist ein Winkelträger 31 befestigt, dessen Flansch 32 einen Servomotor 33 mit Drehgeber und Zahnriemenrad 34 aufnimmt, der die Schneidvorrichtung 29, 30 antreibt. Über ein weiteres Zahnriemenrad 35 und die Wellenverbindung 36 wird die Transportrolle 22 angetrieben.

### Bezugszeichenliste

- 1: Türverkleidung
- 2: Nullpunkt-Einzug
- 3: Einzugsrichtung
- 4: Einlegesteg
- 5: Abdichtfläche
- 6: Rinne für Gummiaufnahm
- 7: Profilgummi
- 8, 8a, 8b, ...: Teach-Stellen, an denen das Roboter-Betriebsprogramm Änderungen des Bewegungsablaufes und der Einzugsbedingungen vornimmt,
- 9: Einzugsende
- 10: Roboterkopf
- 11: Flansch
- 12: Flanschplatte
- 13: Flanschplatte
- 14: Führungsdorn
- 15: Druckfeder
- 16: Linearführung
- 17: Trägerplatte für Einziehkopf
- 18: Einziehkopf
- 19: Vorrat Profilgummi
- 19a: Tänzerwalze
- 20: Profilgummizuführung
- 21: Öse
- 22: Antriebs- und Formrolle bzw. Transportrolle, Messrolle
- 23: Gegenrolle
- 24: Führung für Profilgummi
- 25: obere Führungsschiene
- 26: untere Führungsschiene
- 27: Führungssteg der unteren Führungsschiene
- 28: Andrückrolle
- 29: Schneidzylinder
- 30: Schneidstempel
- 31: Winkelträger
- 32: Flansch
- 33: Servomotor mit Drehgeber
- 34: Zahnriemenrad
- 35: weiteres Zahnriemenrad
- 36: Verbindungswelle

## Patentansprüche

1. Vorrichtung zum Einlegen und Zuführen von Profilgummi (7) in einen Einlegesteg (4) eines Formteiles (1), insbesondere einer Tür eines Kraftfahrzeuges, mit,
einem an einem Roboterkopf (10) angeflanschten Profilgummi-Einlegekopf (18),
einem Rollensystem als Teil des Profilgummi-Einlegekopfes (18), umfassend eine Transportrolle (22) mit zugeordneter Gegendruckrolle (23) und eine in Bewegungsrichtung verlaufend angeordnete Andrückrolle (28),
einer zwischen Andrückrolle (28) und Transportrolle (22) angeordneten Schneidvorrichtung (29, 30) als Teil des Profilgummi-Einlegekopfes (18), **gekennzeichnet dadurch, dass** der Profilgummi-Einlegekopf (18) über eine Linearführung (16) und einen Führungsdorn (14) mit einer Druckfeder (15) federnd gelagert angeordnet ist, derart, dass der auf einer Trägerplatte (17) befestigte Profilgummi-Einlegekopf (18) eine schwimmende Anordnung ausbildet, und durch einen das Formteil (1) aufnehmenden Arbeitstisch (A), wobei das Formteil (1) mit dem Anfang seines Einlegesteges (4) der Andrückrolle (28) zugeordnet ist.

2. Vorrichtung nach Anspruch 1, **dadurch gekennzeichnet, dass** die Transportrolle (22) eine Messrolle ist, und ihre formschlüssige Aufnahme derart geformt, z.B. geriffelt ist, dass ein Verdrehen des Profilgummis (7) vermieden und ein zugfreier Transport sichergestellt ist.

3. Vorrichtung nach Anspruch 1 oder 2, **dadurch gekennzeichnet, dass** zwischen der Transportrolle (22) und der Andrückrolle (28) eine obere und eine untere Führungsschiene (25, 26) vorgesehen sind, die der Zuführung des Profilgummis (7) dienen.

4. Vorrichtung nach Anspruch 3, **dadurch gekennzeichnet, dass** die Führungsschienen (25, 26) hochglanzpoliert sind, und dass sie der Form des Profilgummis (7) angepasst sind.

5. Vorrichtung nach Anspruch 3 oder 4, **dadurch gekennzeichnet, dass** die untere Führungsschiene (26) an dem der Andrückrolle (28) zugewandten Ende eine Führungsnase (27) aufweist.

6. Vorrichtung nach Anspruch 5, **dadurch gekennzeichnet, dass** die Führungsnase (27) an der Andrückrolle (28) derart ausgebildet ist, dass der Profilgummi (7) zum leichteren Einführen in den Einlegesteg (4) öffnet.

7. Vorrichtung nach Anspruch 1, **dadurch gekennzeichnet, dass** die Schneidvorrichtung (29, 30) aus einem Schneidzylinder (29) und einem Schneidstempel (30) besteht.

8. Vorrichtung nach einem der Ansprüche 1 - 7, **dadurch gekennzeichnet, dass** die Andrückrolle (28) im Betriebszustand einen geringen Höhenabstand von ca. 2 mm von dem Einlegesteg (4) aufweist und in Kontakt mit dem Profilgummi (7) aufgrund der Druckwirkung der Druckfeder (15) steht.

9. Vorrichtung nach einem der Ansprüche 1 - 8, **dadurch gekennzeichnet, dass** die Profilgummizuführung über eine Vorratsstelle (19), z.B. eine Abrollhaspel und eine Tänzerrolle (T), die an dem Roboterkopf (10) geführt ist, erfolgt.

10. Vorrichtung nach Anspruch 9, **dadurch gekennzeichnet, dass** der Tänzerrolle (T) ein Messsensor, z.B. ein UltraschallSensor, zugeordnet ist, der die Zug- oder Druckbeanspruchung in dem zugeführten Profilgummi (7) misst, das Profilgummi (7) führt und die Tänzerrolle (T) entsprechend einstellt.

## Claims

1. Device for inserting and conducting profile rubber (7) into an insertion web (4) of a form part (1), particularly of a door of a motor vehicle with, and **characterised by**,
a profile rubber insertion head (18) flanged to a robot head (10), with a spring-mounted arrangement with a compression spring (15) by way of a linear guide (16) and a guide mandrel (14), being arranged in such a way that the profile rubber insertion head (18) secured on the carrier plate (17) forms a floating arrangement,
a roller system as part of the profile rubber insertion head (18), including a transport roll (22) with allocated back pressure roll (23) and a press-on roll (28) routed in the direction of movement,
a cutting device (29, 30) arranged between the press-on roll (28) and transport roll (22) as part of the profile rubber insertion head (18), **wherein** the profile rubber insertion head (18), with a spring-mounted arrangement with a compression spring (15) by way of a linear guide (16) and a guide mandrel (14), being arranged in such a way that the profile rubber insertion head (18) secured on the carrier plate (17) forms a floating arrangement, and by a working table (A) incorporating the form part (1), where the form part (1) is allocated to the press-on roll (28) with the beginning of its insertion web (4).

2. Device according to Claim 1, **wherein** the transport roll (22) is a measuring roll and its positive locking receiver is formed in such a way, for example by means of grooving, that a twist-turn of the profile rubber (7) is avoided and a pull-free transport in ensured.

3. Device according to Claim 1 or 2, **wherein**, between the transport roll (22) and the press-on roll (28), an upper and a lower guide rail (25, 26) are envisaged which serve the purpose of route-guiding for the profile rubber (7).

4. Device according to Claim 3, **wherein** the guide rails (25, 26) are burnished to a fine surface texture finish and are adapted to the form of the profile rubber (7).

5. Device according to Claim 3 or 4, **wherein** the lower guide rail (26) has a guide nose (27) at the end facing the press-on roll (28).

6. Device according to Claim 5, **wherein** the guide nose (27) at the press-on roll (28) is designed in such a way that the profile rubber (7) opens for an easier entry into the insertion web (4).

7. Device according to Claim 1, **wherein** the cutting device (29, 30) consists of a cutting cylinder (29) and a cutting stamp (30).

8. Device according to one of the Claims 1 - 7, **wherein** the press-on roll (28) in operating condition indicates a slight height clearance of approx. 2 mm from the insertion web (4) and stands in contact with the profile rubber (7) because of the compression action of the compression spring (15).

9. Device according to one of the Claims 1 - 8, **wherein** the profile rubber input is guided by way of a supply location (19), e.g. an uncoiler and a dancer roll (T) which is guide-located at the robot head (10).

10. Device according to Claim 9, **wherein** a measuring sensor such as an ultrasonic sensor is allocated to the dancer roll (T) which measures the pull or compression strain in the conducted profile rubber (7), conducts the profile rubber (7) and correspondingly sets the dancer roll (T).

## Revendications

1. Dispositif de pose et d'acheminement d'un joint d'étanchéité profilé (7) sur une nervure de pose (4) d'une pièce moulée (1), en particulier une porte d'un véhicule automobile, comprenant
- une tête d'insertion pour le joint (18) bridée contre une tête de robot (10),
- un système de galets formant une partie de la tête d'insertion pour le joint (18), comprenant un galet transporteur (22) avec un galet de contre-pression (23) associé et un galet de pression disposé de manière mobile dans le sens du déplacement,
- un dispositif de coupe (29, 30) agencé entre le galet de pression (28) et le galet transporteur (22) et formant une partie de la tête d'insertion pour le joint (18),
**caractérisé en ce que** la tête d'insertion pour le joint (18) est logée de manière flexible au moyen d'un ressort de compression (15) au-dessus d'un guidage linéaire (16) et d'une broche de guidage (14), de telle sorte que la tête d'insertion pour le joint (18) fixée contre une plaque de support (17) forme un système flottant, et par une table de travail (A) destinée à recevoir la pièce moulée (1), sachant que la pièce moulée (1) est disposée, avec le début de sa nervure de pose (4), au niveau du galet de pression (28).

2. Dispositif selon la revendication 1, **caractérisé en ce que** le galet transporteur (22) est un galet de mesure et le logement destiné à le recevoir par emboîtement est formé, cannelé par exemple, de manière à empêcher une torsion du joint d'étanchéité profilé (7) et à garantir un transport sans traction.

3. Dispositif selon la revendication 1 ou 2, **caractérisé en ce que**, entre le galet transporteur (22) et le galet de pression (28), sont prévus un rail de guidage supérieur (25) et un rail de guidage inférieur (26), qui servent à l'acheminement du joint d'étanchéité profilé (7).

4. Dispositif selon la revendication 3, **caractérisé en ce que** les rails de guidage (25, 26) sont réalisés avec un poli spéculaire et **en ce qu'**ils sont adaptés à la forme du joint d'étanchéité profilé (7).

5. Dispositif selon la revendication 3 ou 4, **caractérisé en ce que** le rail de guidage inférieur (26) est muni d'un taquet de guidage (27) sur l'extrémité orientée vers le galet de pression (28).

6. Dispositif selon la revendication 5, **caractérisé en ce que** le taquet de guidage (27) au niveau du galet de pression (28) est conçu de telle sorte que le joint d'étanchéité profilé (7) s'ouvre pour être inséré plus facilement dans la nervure de pose (4).

7. Dispositif selon la revendication 1, **caractérisé en ce que** le dispositif de coupe (29, 30) est formé par un cylindre de coupe (29) et un poinçon de coupe (30).

8. Dispositif selon l'une quelconque des revendications 1 à 7, **caractérisé en ce que**, en cours de service, le galet de pression (28) est situé à une faible distance, à savoir 2 mm environ, au-dessus de la nervure de pose (4) et est en contact avec le joint d'étanchéité profilé (7) sous l'effet de la pression exercée par le ressort de compression (15).

9. Dispositif selon l'une quelconque des revendications 1 à 8, **caractérisé en ce que** le joint d'étanchéité profilé est acheminé à partir d'une zone de stockage (19), telle qu'une bobine de déroulement et un galet libre (T), qui est logée au niveau de la tête du robot (10).

10. Dispositif selon la revendication 9, **caractérisé en ce qu'**un capteur de mesure, tel qu'un capteur d'ultrasons, est associé au galet libre (T), ledit capteur étant destiné à mesurer la sollicitation de traction ou de pression dans le joint d'étanchéité profilé (7) acheminé, à guider le joint d'étanchéité profilé (7) et à régler de manière correspondante le galet libre (T).
